# EUROPEAN PATENT SPECIFICATION

(11) **EP 2 717 588 B1**
(45) Date of publication and mention of the grant of the patent: **30.05.2018**
(21) Application number: 13183406.1
(22) Date of filing: 06.09.2013
(51) Int. Cl.: H04N 19/61, H04N 19/117, H04N 19/132, H04N 19/136, H04N 19/186, H04N 19/85, H04N 19/59

(54) **Video encoding and decoding with chrominance sub-sampling**
Videokodierung und Videodekodierung mit Chrominanzunterabtastung
Codage et décodage vidéo avec sous-échantillonnage de chrominance

(30) Priority: 06.09.2012 GB 201215940
(43) Date of publication of application: 09.04.2014
(73) Proprietor: British Broadcasting Corporation, London W1A 1AA (GB)
(72) Inventor: Mrak, Marta, London W12 7 SB (GB); Gabriellini, Andrea, London W12 7SB (GB)
(74) Representative: Garratt, Peter Douglas

(56) References cited:
- EP-A1- 1 742 478
- "4:2:2 / 4:2:0 Format Conversion Minimizing Color Difference Signal Degradation in Concatenated Operations - Filtering", The Society of Motion Picture and Television Engineers , 30 January 2012 (2012-01-30), pages 1-11, XP055094080, ISBN: 978-1-61-482653-8 Retrieved from the Internet: URL:http://standards.smpte.org/content/978 -1-61482-653-8/rp-2050-1-2012/SEC1 [retrieved on 2013-12-18]
- AMMAR N ET AL: "Switched SVC Up-sampling Filter", 18. JVT MEETING; 75. MPEG MEETING; 14-01-2006 - 20-01-2006; BANGKOK,TH; (JOINT VIDEO TEAM OF ISO/IEC JTC1/SC29/WG11 AND ITU-T SG.16 ), no. JVT-R075, 11 January 2006 (2006-01-11) , XP030006342, ISSN: 0000-0410
- CHEN YING ET AL: "4:2:0 chroma sample format for phase difference eliminating and color space scalability", 15. JVT MEETING; 72. MPEG MEETING; 16-04-2005 - 22-04-2005; BUSAN, KR; (JOINT VIDEO TEAM OF ISO/IEC JTC1/SC29/WG11 AND ITU-T SG.16 ), no. JVT-O078, 16 April 2005 (2005-04-16), pages 1-13, XP002362574,
- ANDREA GABRIELLINI ET AL: "AHG7: On processing 4:2:2 chroma format", 11. JCT-VC MEETING; 102. MPEG MEETING; 10-10-2012 - 19-10-2012; SHANGHAI; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-K0286, 3 October 2012 (2012-10-03), XP030113168,
- KAWAMURA K ET AL: "AHG12: 4:2:2/4:4:4 chroma format extension for HEVC Version 2", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, no. JCTVC-J0357, 3 July 2012 (2012-07-03), XP030112719,

## Description

### FIELD OF THE INVENTION

This invention is related to video compression and decompression systems in which chrominance information is sub-sampled relative to luminance information and in particular to such systems where the chrominance sub-sampling varies between horizontal and vertical directions.

### BACKGROUND OF THE INVENTION

It is well understood that since the human visual system is much more sensitive to variations in brightness than colour, a video compression system need devote less bandwidth to chrominance information (typically colour difference components Cb and Cr) than to luminance information, the luminance component being usually denoted Y. Using the standard format notation in which 4:4:4 indicates no chrominance sub-sampling, video compression systems commonly utilise 4:2:0 in which Cb and Cr are each sub-sampled at a factor of 2 both horizontally and vertically. In for example H.262/MPEG2 or H.264/AVC, a macro-block may contain four 8X8 luminance blocks but only one Cb block and only one Cr block.
In 4:2:0, (as well as of course in 4:4:4) there is uniform sampling of chrominance in both horizontal and vertical directions, that is to say the chrominance information is sampled at the same sample densities in the horizontal and vertical directions. In high quality professional applications (for example CCIR 601) it has long been common to employ 4:2:2 in which Cb and Cr are each sub-sampled at a factor of 2 in only the horizontal direction. Thus, chrominance information is sampled at different sample densities in the horizontal and vertical directions respectively.

The SMPTE Recommendation RP 2050-1:2012 discloses 4:2:2/4:2:0 format conversion operations as pre- and post-processing steps to video encoding and decoding. It is an object of this invention to provide more efficient techniques in encoding and decoding to accommodate video formats such as 4:2:2 where chrominance information is sampled at different sample densities in the horizontal and vertical directions respectively.

### SUMMARY OF THE INVENTION

In one aspect, the present invention consists in a method of video encoding as defined in claim 1. The encoded bitstream may contain a message indicating a chrominance resampling from the first chrominance sampling format.

The invention also involves a video encoder implementing the above method. Suitably, the encoder has a first mode of operation in which the second chrominance sampling format is up-sampled with respect to the first chrominance sampling format and a second mode of operation in which the second chrominance sampling format is down-sampled with respect to the first chrominance sampling format; and wherein a message in the encoded bitstream indicates the mode of operation.
The encoder may select between a plurality of chrominance resampling filters; wherein a message in the encoded bitstream indicates the selection of filter for the decoder In another aspect, the present invention consists in a method of decoding an encoded bitstream as defined in claim 5. Where the encoded bitstream contains a message indicating a chrominance resampling from the first chrominance sampling format; the step of receiving the encoded bitstream in the second chrominance sampling format may comprise decoding said message with the step of resampling to the first chrominance sampling format being conducted in response to said message. The resampling may switch in response to said message between down-sampling and up-sampling. The resampling may be conducted by a chrominance resampling filter selected in response to said message from a plurality of chrominance resampling filters.
Suitably, the step of resampling to the first chrominance sampling format is completed before said reconstruction.

In another aspects, the present invention consists in a video decoder configured to implement the above decoding method; and a non-transitory computer program configured to cause programmable apparatus to implement either.

### BRIEF DESCRIPTION OF THE DRAWINGS

Figure 1 is a block diagram of an encoder according to an embodiment:
Figure 2 is a block diagram of a decoder according to an embodiment.

### DETAILED DESCRIPTION OF PREFERRED EMBODIMENTS

Video compression formats that have some components sub-sampled in only one direction (e.g. 4:1:1 or 4:2:2) are normally compressed in a way that such format is used as an input to the encoder and encoder's compression algorithms also operate on such sub-sampled chroma pixels. This invention proposes an alternative where, during encoding a video can be processed so that uniform sampling in both directions is achieved. To reconstruct the native format, during decoding an additional step is used to re-sample (down-sample or up-samples) decoded pixels. Such a video codec performs basic compression methods (transform, quantisation, entropy coding) on uniformly sampled signals. The benefits of such codec are:
- Ensuring that the output of the decoder can provide sampling decided by the encoder and that each receiver obtains the same decoded video (which does not depend on a re-sampler that is unknown at the encoding, i.e. transmission side).
- Preserving efficiency and simplicity of coding tools designed for uniform sampling. Additional functionalities can be introduced which give more freedom for content adaptation during the compressed bitstream creation stage. These are introduced by for example allowing choice of down- or up-sampling filters which can be dynamically changed during compression. Decoding parameters can be adapted to provide desired decoding output.

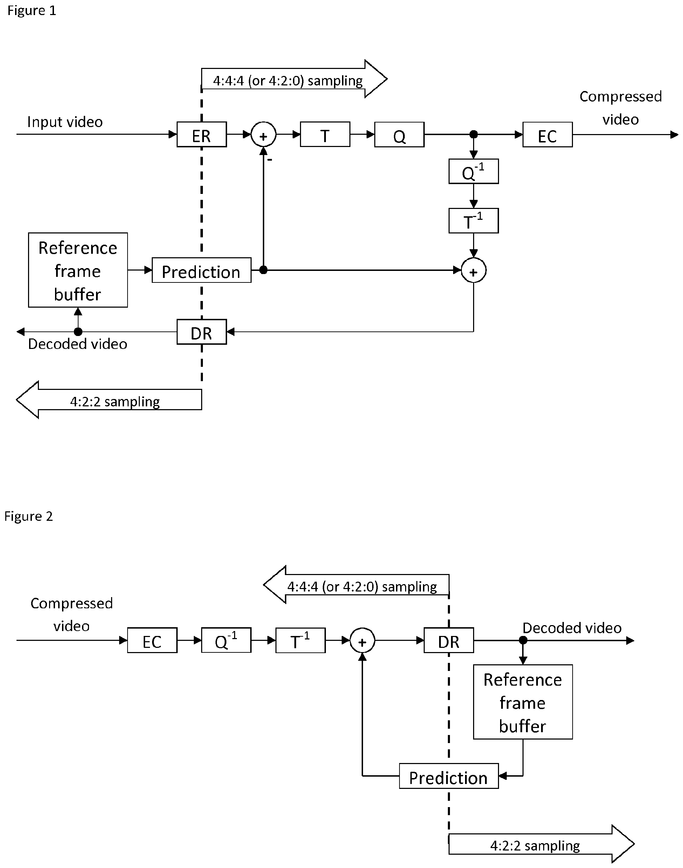

Reference is directed to Figure 1 which shows an encoder which is adapted to receive input video in the 4:2:2 chrominance sampling format and which includes a chrominance resampling filter ER arranged so that the transform T, quantisation Q and entropy coding EC steps are performed in a chrominance sampling format in which the chrominance information is sampled at the same sample densities in the horizontal and vertical directions, such as 4:4:4 or 4:2:0. The compressed bitstream output is thus in chrominance sampling format in which the chrominance information is sampled at the same sample densities in the horizontal and vertical directions.

Within the local decoder provided at the encoder, there is a decoder re-sampler (DR). So, after inverse quantisation Q⁻¹ and inverse transformation T⁻² and addition of the previous prediction, the locally decoded video is resampled to 4:2:2 format before storage in the reference frame buffer which provides the reference samples for the prediction. At some point in the prediction path between the reference frame buffer and the subtractor which forms the residual for transformation at T, resampling will be conducted to ensure that the prediction which is subtracted is in the same chrominance sampling format as the resampled video from which it is subtracted.

Resampling will typically be chrominance up-sampling to 4:4:4.

It may be helpful for the encoder to have an additional mode of operation in which chrominance is down-sampled to 4:2:0. It may also be helpful for the encoder, whether up-sampling or down-sampling to have a selection of resampling filters available to it. The encoder may then make decisions on whether to up-sample or down-sample and on which resampling filter to select, based on video content or other relevant parameters and constraints. The encoder will signal its decisions to the decoder so that the decoder may employ complementary resampling. Specifically, format parameters signalling the use of re-sampling and - where appropriate - conveying information about the type of re-sampling (up or down); the chrominance re-sampling filter used and the nature of the prediction loop are provided to the entropy encoder and bit-stream forming block for incorporation in the bit-stream as a message.

An example of an application scenario is given in Table A which represents a compression timeline of video in 4:2:2 format. The sampling filter required at the decoder is communicated in the compressed bit-stream. The filter notation is used:
- Eu = Encoder up-sampling filter
- Dd = Decoder down-sampling filter
- Ed = Encoder down-sampling filter
- Du = Decoder up-sampling filter.

**Table A.**

| Time period | Encoder | Decoder | Reason |
|---|---|---|---|
| A | Upsampling to 4:4:4 using filter Eu1 | Downsampling to 4:2:2 using filter Dd1 | High quality needed, which can be ensured using filter pair Eu1/Dd1 |
| B | Upsampling to 4:4:4 using filter Eu2 | Downsampling to 4:2:2 using filter Dd2 | For a required effect use other set of filters (Eu2/Dd2) |
| C | Downsampling to 4:2:0 using filter Ed1 | Upsampling to 4:2:2 using filter Du1 | Rate control selects lower sampling rate to achieve target bit-rate |
| D | Upsampling to 4:4:4 using filter Eu1 | Downsampling to 4:2:2 using filter Dd2 | Another effect achieved using filter pair Eu1/Dd2 |

Another simple scenario can also be achieved, as demonstrated in Table B. In this example, uniform sampling is achieved by repetition of pixels in the direction with lower sampling rate.
- EuLL = Encoder up-sampling filter repeating vertical columns of pixels
- DuLL = decoder down-sampling filter deleting repeated columns

**Table B.**

| Time period | Encoder | Decoder | Reason |
|---|---|---|---|
| Whole duration of the video | Upsampling to 4:4:4 using filter EuLL | Downsampling to 4:2:2 using filter DdLL | Lossless coding |

Although core compression is performed on uniformly sampled video, the decoder receives a signal indicating decoding to another format (e.g. 4:2:2). The decoder is then capable of re-sampling the signal. For example,
- In case of 4:2:2 format coded as 4:4:4, a simple approach of discarding half of samples related to Cb and Cr components in a normative way can be used.
- In case of 4:2:2 format coded as 4:2:0, a simple approach of obtaining missing chroma samples can be achieved by averaging neighbouring samples in columns of chroma pixels.

Possibilities for decoder design include:
- 4:2:2 from 4:4:4:
   ∘ downsampling using default filter (e.g. example A)
   ∘ downsampling using a filter signalled by the encoder
      ▪ decoder has a number of downsampling filters; compressed bit-stream includes signalling on which filter to use for reconstruction
      ▪ decoder receives the filter description (e.g. by means of filter's coefficients), and uses a generic filtering module that performs filtering according to given filter choice
- 4:2:2 from 4:2:0:
   ∘ upsampling using default filter (e.g. example B)
   ∘ upsampling using a filter signalled by the encoder
      ▪ decoder has a number of upsampling filters; compressed bit-stream includes signalling on which filter to use for reconstruction
      ▪ decoder receives the filter description (e.g. by means of filter's coefficients), and uses a generic filtering module that performs filtering according to given filter choice

Instead of such re-sampling happening after full reconstruction of uniformly sampled video, a decoder as shown Figure 2 provides a desirable alternative. It will be seen that the decoder resampling filter DR is positioned before the reference frame buffer. Thus some elements of the decoder operate on uniform samples (4:4:4 or 4:2:0); others operate on samples that are in the required sampling format for output (4:2:2).

Decoded frames in native 4:2:2 format are used for forming the prediction. On the other hand, the residual coming from the transform T is uniformly sampled. Therefore the prediction has to be resampled to uniform sampling. After this step of reconstruction, in which the prediction is added to the residual, the reconstructed frame is in uniformly sampled format. Before any full frame filtering and outputting of decoded video, the chroma samples are converted to the native 4:2:2 format.

An advantage of the arrangement shown in Figure 2, where resampling occurs prior to full reconstruction of the entire frame, is that the frame buffer or buffers that are required to store reconstructed frames for future use are (where up sampling to 4:4:4 is selected at the encoder) at a lower chrominance sampling rate.

It will be understood that this invention has been described by way of example only and a wide variety of modifications are possible without departing form the scope of the invention.

## Claims

1. A method of video encoding comprising the steps of:
receiving a video input in a first chrominance sampling format in which chrominance information is sampled at different sample densities in the horizontal and vertical directions respectively;
resampling the video to a second chrominance sampling format in which the chrominance information is sampled at the same sample densities in the horizontal and vertical directions, wherein at least in a first mode of operation the second chrominance sampling format is up-sampled with respect to the first chrominance sampling format;
storing reference samples in the first chrominance format;
forming residuals in which chrominance information is sampled in the second chrominance format by subtraction of a prediction formed through the use of the reference samples with resampling such that the prediction is in the second chrominance format; and
transforming, quantising and entropy coding the residuals to form an encoded bitstream in the second chrominance sampling format.

2. A method according to Claim 1, wherein the encoded bitstream contains a message indicating a chrominance resampling from the first chrominance sampling format.

3. A method according to Claim 1 or Claim 2, further comprising a second mode of operation in which the second chrominance sampling format is down-sampled with respect to the first chrominance sampling format; and wherein a message in the encoded bitstream indicates the mode of operation.

4. A method according to any one of the preceding claims, further comprising selecting between a plurality of chrominance resampling filters; wherein a message in the encoded bitstream indicates the selection of filter for the decoder.

5. A method of decoding an encoded bitstream comprising the steps of:
receiving the encoded bitstream in a second chrominance sampling format in which the chrominance information is sampled at the same sample densities in the horizontal and vertical directions;
performing inverse entropy coding, quantising and transforming steps to provide a residual in the second chrominance sampling format;
reconstructing a video output from the residual and a prediction;
resampling to a first chrominance sampling format in which chrominance information is sampled at different sample densities in the horizontal and vertical directions respectively after said reconstruction, wherein at least in a first mode of operation the first chrominance sampling format is down-sampled with respect to the second chrominance sampling format;
storing decoded samples in the first chrominance format; and
computing the prediction from said decoded samples with resampling such that the prediction is in the second chrominance format.

6. A method according to Claim 5, wherein
the encoded bitstream contains a message indicating a chrominance resampling from the first chrominance sampling format;
the step of receiving the encoded bitstream in the second chrominance sampling format comprises decoding said message; and
the step of resampling to the first chrominance sampling format is conducted in response to said message.

7. A method according to Claim 6, wherein the resampling switches in response to said message between the first mode of operation and a second mode of operation, wherein in the second mode of operation the first chrominance sampling format is up-sampled with respect to the second chrominance sampling format.

8. A method according to Claim 6, wherein the resampling is conducted by a chrominance resampling filter selected in response to said message from a plurality of chrominance resampling filters.

9. A video encoder configured to implement a method according to any one of Claim 1 to Claim 4.

10. A video decoder configured to implement a method according to any one of Claim 5 to Claim 8.

11. A computer program product configured to cause programmable apparatus to implement a method according to any one of Claim 1 to Claim 8.

## Patentansprüche

1. Verfahren zum Video-Encodieren, das die folgenden Schritte beinhaltet:
Empfangen eines Videoeingangs in einem ersten Chrominanzabtastformat, in dem Chrominanzinformationen mit unterschiedlichen Sample-Dichten jeweils in horizontaler und vertikaler Richtung abgetastet werden;
Neuabtasten des Videos auf ein zweites Chrominanzabtastformat, in dem die Chrominanzinformationen mit denselben Sample-Dichten in horizontaler und vertikaler Richtung abgetastet werden, wobei wenigstens in einem ersten Betriebsmodus das Chrominanzabtastformat mit Bezug auf das erste Chrominanzabtastformat upgesampelt wird;
Speichern von Referenz-Samples im ersten Chrominanzformat;
Bilden von Resten, in denen Chrominanzinformationen im zweiten Chrominanzformat durch Subtrahieren einer durch Benutzen der Referenz-Samples gebildeten Prädiktion mit Neuabtastung abgetastet werden, so dass die Prädiktion im zweiten Chrominanzformat ist; und
Transformieren, Quantisieren und Entropiecodieren der Reste zum Bilden eines encodierten Bitstroms im zweiten Chrominanzabtastformat.

2. Verfahren nach Anspruch 1, wobei der encodierte Bitstrom eine Nachricht enthält, die eine Chrominanzneuabtastung vom ersten Chrominanzabtastformat anzeigt.

3. Verfahren nach Anspruch 1 oder Anspruch 2, das ferner einen zweiten Betriebsmodus umfasst, in dem das zweite Chrominanzabtastformat mit Bezug auf das erste Chrominanzabtastformat downgesampelt wird; und wobei eine Nachricht im encodierten Bitstrom den Betriebsmodus anzeigt.

4. Verfahren nach einem der vorherigen Ansprüche, das ferner das Auswählen zwischen mehreren Chrominanzneuabtastfiltern beinhaltet; wobei eine Nachricht im encodierten Bitstrom die Filterauswahl für den Decoder anzeigt.

5. Verfahren zum Decodieren eines encodierten Bitstroms, das die folgenden Schritte beinhaltet:
Empfangen des encodierten Bitstroms in einem zweiten Chrominanzabtastformat, in dem die Chrominanzinformationen mit denselben Sample-Dichten in horizontaler und vertikaler Richtung abgetastet werden;
Durchführen von Umkehr-Entropiecodierungs-, Quantisierungs- und Transformationsschritten zum Bereitstellen eines Rests im zweiten Chrominanzabtastformat;
Rekonstruieren eines Videoausgangs vom Rest und einer Prädiktion;
Neuabtasten auf ein erstes Chrominanzabtastformat, in dem Chrominanzinformationen mit unterschiedlichen Sample-Dichten jeweils in horizontaler und vertikaler Richtung nach der genannten Rekonstruktion abgetastet werden, wobei wenigstens in einem ersten Betriebsmodus das erste Chrominanzabtastformat mit Bezug auf das zweite Chrominanzabtastformat downgesampelt wird;
Speichern von decodierten Samples im ersten Chrominanzformat; und
Berechnen der Prädiktion von den genannten decodierten Samples mit Neuabtastung, so dass die Prädiktion im zweiten Chrominanzformat ist.

6. Verfahren nach Anspruch 5, wobei
der encodierte Bitstrom eine Nachricht enthält, die eine Chrominanzneuabtastung vom ersten Chrominanzabtastformat anzeigt;
der Schritt des Empfangens des encodierten Bitstroms im zweiten Chrominanzabtastformat das Decodieren der genannten Nachricht beinhaltet; und
der Schritt des Neuabtastens auf das erste Chrominanzabtastformat als Reaktion auf die genannte Nachricht durchgeführt wird.

7. Verfahren nach Anspruch 6, wobei die Neuabtastung als Reaktion auf die genannte Nachricht zwischen dem ersten Betriebsmodus und einem zweiten Betriebsmodus umschaltet, wobei im zweiten Betriebsmodus das erste Chrominanzabtastformat mit Bezug auf das zweite Chrominanzabtastformat upgesampelt wird.

8. Verfahren nach Anspruch 6, wobei das Neuabtasten durch ein Chrominanzneuabtastfilter durchgeführt wird, ausgewählt als Reaktion auf die genannte Nachricht von mehreren Chrominanzneuabtastfiltern.

9. Video-Encoder, konfiguriert zum Implementieren eines Verfahrens nach einem der Ansprüche 1 bis 4.

10. Video-Decoder, konfiguriert zum Implementieren eines Verfahrens nach einem der Ansprüche 5 bis 8.

11. Computerprogrammprodukt, das konfiguriert ist zum Bewirken, dass die programmierbare Vorrichtung ein Verfahren nach einem der Ansprüche 1 bis 8 durchführt.

## Revendications

1. Procédé de codage vidéo comportant les étapes consistant à :
recevoir une entrée vidéo dans un premier format d'échantillonnage de chrominance dans lequel les informations de chrominance sont échantillonnées à différentes densités d'échantillons dans les directions horizontale et verticale respectivement ;
rééchantillonner la vidéo selon un deuxième format d'échantillonnage de chrominance dans lequel les informations de chrominance sont échantillonnées aux mêmes densités d'échantillons dans les directions horizontale et verticale, dans lequel, au moins dans un premier mode de fonctionnement, le deuxième format d'échantillonnage de chrominance est sur-échantillonné par rapport au premier format d'échantillonnage de chrominance ;
stocker des échantillons de référence dans le premier format de chrominance ;
former des résidus dans lequel les informations de chrominance sont échantillonnées dans le deuxième format de chrominance par la soustraction d'une prédiction formée par l'utilisation des échantillons de référence avec le rééchantillonnage de telle sorte que la prédiction est dans le deuxième format de chrominance ; et
transformer, quantifier et coder par entropie les résidus pour former un flux binaire codé dans le deuxième format d'échantillonnage de chrominance.

2. Procédé selon la revendication 1, dans lequel le flux binaire codé contient un message indiquant un rééchantillonnage de chrominance par rapport au premier format d'échantillonnage de chrominance.

3. Procédé selon la revendication 1 ou la revendication 2, comportant par ailleurs un deuxième mode de fonctionnement dans lequel le deuxième format d'échantillonnage de chrominance est sous-échantillonné par rapport au premier format d'échantillonnage de chrominance ; et dans lequel un message dans le flux binaire codé indique le mode de fonctionnement.

4. Procédé selon l'une quelconque des revendications précédentes, comportant par ailleurs l'étape consistant à sélectionner entre une pluralité de filtres de rééchantillonnage de chrominance ; dans lequel un message dans le flux binaire codé indique la sélection du filtre pour le décodeur.

5. Procédé de décodage d'un flux binaire codé comportant les étapes consistant à :
recevoir le flux binaire codé dans un deuxième format d'échantillonnage de chrominance dans lequel les informations de chrominance sont échantillonnées aux mêmes densités d'échantillons dans les directions horizontale et verticale ;
effectuer les étapes inverses consistant à coder par entropie, à quantifier et à transformer pour fournir un résidu dans le deuxième format d'échantillonnage de chrominance ;
reconstruire une sortie vidéo à partir du résidu et d'une prédiction ;
rééchantillonner selon un premier format d'échantillonnage de chrominance dans lequel les informations de chrominance sont échantillonnées à différentes densités d'échantillons dans les directions horizontale et verticale respectivement après ladite reconstruction, dans lequel, au moins dans un premier mode de fonctionnement, le premier format d'échantillonnage de chrominance est sous-échantillonné par rapport au deuxième format d'échantillonnage de chrominance ;
stocker les échantillons décodés dans le premier format de chrominance ; et
calculer la prédiction à partir desdits échantillons décodés avec le rééchantillonnage de telle sorte que la prédiction est dans le deuxième format de chrominance.

6. Procédé selon la revendication 5, dans lequel
le flux binaire codé contient un message indiquant un rééchantillonnage de chrominance par rapport au premier format d'échantillonnage de chrominance ;
l'étape consistant à recevoir le flux binaire codé dans le deuxième format d'échantillonnage de chrominance comporte l'étape consistant à décoder ledit message ; et
l'étape consistant à rééchantillonner selon le premier format d'échantillonnage de chrominance est effectuée en réponse audit message.

7. Procédé selon la revendication 6, dans lequel le rééchantillonnage commute, en réponse audit message, entre le premier mode de fonctionnement et un deuxième mode de fonctionnement, dans lequel, dans le deuxième mode de fonctionnement, le premier format d'échantillonnage de chrominance est sur-échantillonné par rapport au deuxième format d'échantillonnage de chrominance.

8. Procédé selon la revendication 6, dans lequel le rééchantillonnage est effectué par un filtre de rééchantillonnage de chrominance sélectionné en réponse audit message en provenance d'une pluralité de filtres de rééchantillonnage de chrominance.

9. Encodeur vidéo configuré à des fins de mise en oeuvre d'un procédé selon l'une quelconque de la revendication 1 à la revendication 4.

10. Décodeur vidéo configuré à des fins de mise en oeuvre d'un procédé selon l'une quelconque de la revendication 5 à la revendication 8.

11. Produit programme informatique configuré pour amener un appareil programmable à effectuer la mise en oeuvre d'un procédé selon l'une quelconque de la revendication 1 à la revendication 8.
